# EUROPÄISCHE PATENTSCHRIFT

(11) **EP 1 679 145 B1**
(45) Veröffentlichungstag und Bekanntmachung des Hinweises auf die Patenterteilung: **12.03.2008**
(21) Anmeldenummer: 06003663.9
(22) Anmeldetag: 21.06.2003
(51) Int. Cl.: B23D 53/04

(54) **Metallbandsäge mit aufgehängtem Sägerahmen**
Metal-cutting band saw comprising a suspended saw frame
Scie à ruban à métaux avec cadre de scie suspendu

(30) Priorität: 03.07.2002 DE 10229999
(43) Veröffentlichungstag der Anmeldung: 12.07.2006
(62) Teilanmeldung aus: 03762413.7
(73) Patentinhaber: Diener, Mark, 73732 Esslingen (DE)
(72) Erfinder: Diener, Mark, 73732 Esslingen (DE)
(74) Vertreter: Rüger, Barthelt & Abel Patentanwälte

(56) Entgegenhaltungen:
- EP-A- 0 491 120
- EP-A- 0 722 814
- US-A- 2 669 261
- US-A- 5 144 994

## Beschreibung

Aus der DE 40 40 470 A1 ist eine Metallbandsäge bekannt, die ein Maschinengestellt aufweist, auf dem das abzulängende Werkstück aufzulegen ist. An dem Maschinengestell befindet sich ein Spannstock, mit dem das zu bearbeitende Werkstück auf dem Maschinengestell festgelegt wird. Zu dem Spannstock gehört eine feststehende Spannbacke, die gleichzeitig eine Referenzfläche darstellt.

Der Sägerahmen, in dem das Sägeband gelagert ist, kann mit Hilfe eines Schwenklagers in unterschiedliche Gehrungsstellungen gebracht werden. Das hierzu erforderliche Schwenklager sitzt unterhalb der Werkstückebene und trägt nicht nur den Sägerahmen sondern gleichzeitig auch noch einen Werkstückauflagetisch, mit dem jener Teil des Werkstücks beim Sägen unterstützt werden soll, der der spangebenden Bearbeitung unterliegt.

Der Vorteil dieser Anordnung besteht darin, dass das Sägeband gegenüber dem Auflagetisch keine Schwenkbewegung in horizontaler Richtung vollführt und deswegen immer an derselben Stelle in den Auflagetisch eintaucht, unabhängig von der Gehrungseinstellung.

Diesen Vorteil stehen jedoch eine Reihe gewichtiger Nachteile gegenüber.

Das Schwenklager befindet sich einem Bereich, in dem Schmutz, Späne und Kühlmittel anfallen. Die Drehlagerung selbst ist für Wartungszwecke schlecht zugänglich. Beim Verstellen des Gehrungswinkels muss der Tisch unterhalb des Werkstücks mitgedreht werden. Die Auflagekräfte, mit denen das Werkstück auf den Auflagetisch drückt, sind stark variabel und hängen von der relativen Form des Werkstücks ab. Somit treten stark unterschiedliche Kräfte auf, wenn der Tisch gedreht werden muss. Der Antrieb zum Einstellen des Gehrungswinkels ist deswegen auf die maximal mögliche Kraft auszulegen.

Die hohe Auflagekraft macht außerdem eine exakte Gehrungseinstellung praktisch unmöglich. Aufgrund der Eigenelastizität der gesamten Anordnung tritt je nach Reibverhältnissen zwischen Auflagetischen und Werkstück eine unterschiedlich große Verspannung auf. Abhängig von der Verspannung unterscheidet sich die Ist-Gehrungsstellung von der Soll-Gehrungsstellung.

Eine etwas andere Geometrie für eine Sägemaschine zum Sägen von Kalksandstein-Rohlingen ist aus der EP 0 722 814 A1 bekannt. Die Sägemaschine weist ein Portal auf, dessen Querbalken ein Drehlager enthält mit einer vertikalen Drehachse. An dem Drehlager ist ein Zwischenträger befestigt, an dem wiederum der Sägerahmen mit Hilfe von Parallelführungen auf und ab bewegbar ist. Durch die Auf- und Ab-Bewegung wird das in dem Sägerahmen geführte Sägeband in vertikaler Richtung auf das Werkstück zugestellt. Unterhalb des Werkstücks befindet sich eine Führungseinrichtung, die während des Sägevorgangs am Ort des Sägebands niedergedrückt gehalten wird. Auf diese Weise wird eine Beschädigung der Auflageeinrichtung durch das Sägeband ausgeschlossen.

Das Werkstück liegt bei der Sägebearbeitung lose auf dem Werktisch auf. Wegen der geringen Schnittkräfte genügt es wenn das Werkstück lose auf der Werkstückauflagefläche liegt.

Ausgehend hiervon ist es Aufgabe der Erfindung, eine Sägemaschine zu schaffen, die eine leichtere Zugänglichkeit des Werkstücks schafft.

Diese Aufgabe wird erfindungsgemäß mit der Metallbandsäge mit den Merkmalen des Anspruches 1 gelöst.

Die neue Metallbandsäge weist ein Maschinengestell auf, das eine Auflageeinrichtung für das Werkstück umfasst. Neben der Auflageeinrichtung steht ein Hauptträger, an dem ein Schwenklager angeordnet ist. Das Schwenklager befindet sich oberhalb der Auflageeinrichtung und somit auch oberhalb des zu bearbeitenden Werkstücks. An dem Schwenklager sitzt ein Zwischenträger, an dem wiederum der Sägerahmen beweglich angebracht ist.

Mit Hilfe des Schwenklagers und des Zwischenträgers wird die Gehrungseinstellung vorgenommen.

Da das Schwenklager oberhalb des Werkstückes angeordnet ist, erfordert ein Schwenken des Zwischenträgers keine nennenswerte Kraft. Während des Verstellung des Gehrungswinkels stehen keine Teile, die mit dem Schwenklager oder dem Zwischenrahmen verbunden sind in irgendeiner Weise mit dem Werkstück in Eingriff. Damit ist die Kraft zum Verstellen des Zwischenträgers nur von den Lagerkräfte abhängig, die extrem klein sind. Die Gehrungseinstellung wird folglich nicht durch irgendwelche Eigenelastizitäten des Systems beeinträchtigt.

Da das Schwenklager oberhalb des Werkstücks angeordnet ist, befindet es sich in einer Zone, in der weder Kühlmittel noch Späne auftreten. Die Abdichtung des Schwenklagers ist damit wesentlich unkomplizierter. Die geringere Verschmutzungsgefahr kommt obendrein der Lebensdauer und Präzision der Schwenklagerung erheblich entgegen.

Darüber hinaus ist die neue Anordnung in Materialflussrichtung sehr kompakt.

Der Hauptträger hat eine galgenartige Gestalt. Die galgenförmige Konfiguration hat den wesentlichen Vorteil, dass der Auflagetisch für das Werkstück von der Seite her zugänglich ist. Lange Werkstücke, die einem mittleren Bereich getrennt werden müssen, können von der Seite her in die Maschine eingegeben werden. Sie brauchen nicht aufgelegt und in Längsrichtung durch die Maschine geschoben werden.

Je nach Ausführung des Hauptträgers können ohne weiteres Gehrungswinkel bis zu 30° erreicht werden, ohne dass die Maschine in Längsrichtung, d.h. in Richtung des Materialflusses nennenswert größer werden muss.

Bei Sägemaschinen nach dem Stand der Technik hingegen musste ein sektorförmiger Drehtisch verwendet werden, wobei der Sektorwinkel bei Doppelgehrungen dem Doppelten des möglichen Gehrungswinkels entspricht, so dass die Maschine allein aufgrund der Abmessungen des Auflagetisches beachtliche Werte annimmt.

Wenn bei der galgenförmigen Ausführungsform der auskragende Balken parallel zur Materialflussrichtung liegt, so dass der Pfeiler in Materialflussrichtung gegenüber der Schnittposition versetzt ist, sind ohne weiteres Gehrungsverstellungen in beiden Richtungen möglich, während andererseits der Pfeiler sehr dicht an die Bearbeitungsstelle herangerückt werden und mit einem kurz auskragenden Balken gearbeitet werden kann.

Der Pfeiler kann mit dem Maschinengestell fest verbunden oder unabhängig von diesem auf einem Betonfundament befestigt sein.

Auch für den Zwischenträger, an dem der Sägerahmen befestigt ist, kommen mehrere Ausführungsformen in Betracht. So kann der Zwischenträger eine L-förmige Gestalt haben, wenn der Sägerahmen lediglich an einem Ende geführt wird, oder aber der Zwischenträger kann eine im Wesentlichen gabelförmige Gestalt haben, was von Vorteil ist, wenn der Sägerahmen längs einer linearen Achse auf das Werkstück zugestellt wird.

Die Auflageeinrichtung für das Werkstück besteht im Wesentlichen aus einer Tischplatte, die als Verschleißteil ausgeführt ist. Beim Sägen wird in die Tischplatte eingeschnitten. Die Tischplatte wird im Laufe der Zeit verbraucht, wenn mit ständig wechselnden Gehrungen gearbeitet wird, die nicht miteinander übereinstimmen. Da jedoch üblicherweise nur wenige Gehrungswinkel benötigt werden, enthält die Tischplatte nur wenige Sägeschnitte, so dass eine hohe Lebensdauer ohnehin zu erwarten ist.

Um das Eingeben des Werkstücks in die Sägemaschine zu vereinfachen, umfasst die Auflageeinrichtung Rollen, deren Außenumfangsfläche eine Ebene berührt, in der auch die Tischfläche liegt.

Um insbesondere bei Gehrungsschnitten das Werkstück präzise zu halten, ist der Auflageeinrichtung der Spannstock zu geordnet, der einen feststehenden und einen zustellbaren Backen aufweist, um das Werkstück zwischen den Backen einzuklemmen. Der feststehende Backen bildet dabei in der üblichen Weise eine Referenzebene, an der das Werkstück anliegt und gegenüber der auch der Gehrungswinkel gemessen wird. Zur Vereinfachung der Längenbestimmung des abzulängenden Werkstückes liegt die vertikale Schwenkachse vorzugsweise in einer Ebene, die durch den festen Backen des Spannstocks definiert ist.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In den Zeichnungen 3-5 sind Ausführungsbeispiele des Gegenstandes der Erfindung dargestellt. Es zeigen:
- Fig. 1: eine Metallbandsäge mit einem portalförmigen Hauptträger, gesehen in Richtung parallel zu der Materialflussrichtung,
- Fig. 2: die Metallbandsäge nach Figur 1, in einer draufsicht, wobei die Gehrungseinstellungen gestrichelt dargestellt sind,
- Fig. 3: eine erfindungsgemäße Metallbandsäge mit einem galgenförmigen Hauptträger, gesehen in Richtung parallel zu der Materialflussrichtung,
- Fig. 4: die Metallbandsäge nach Figur 3, in einer Draufsicht, wobei die Gehrungseinstellungen gestrichelt dargestellt sind, und
- Fig. 5: eine erfindungsgemäße Metallbandsäge mit Schwenklagerung des Sägerahmens.

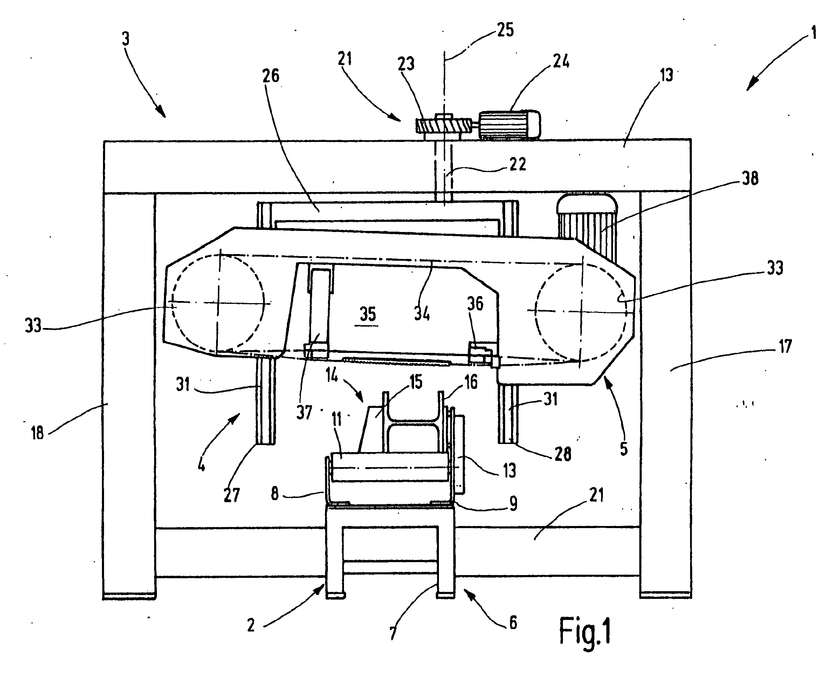

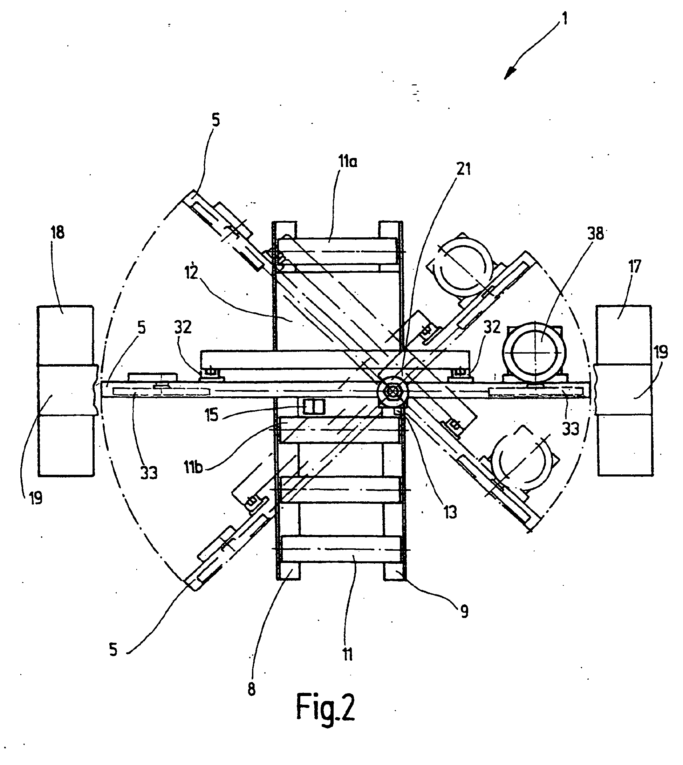

Die Figuren 1 und 2 zeigen eine Metallbandsäge 1. Zu der Metallbandsäge 1 gehört ein Maschinengestell 2, über das sich ein portalförmiger Hauptträger 3 spannt, der auf dem Bodenfundament befestigt ist. An dem Hauptträger 3 ist ein Zwischenträger 4 schwenkbar gelagert, der seinerseits der Halterung eines Sägerahmens 5 dient.

Das Maschinengestell 2 setzt sich aus einem Untergestellt 6 mit Füßen 7 zusammen. Auf der Oberseite des Untergestells 6 sind zwei in Längsrichtung durchlaufende Winkelprofilschienen 8 und 9 befestigt. Zwischen den Winkelprofilschienen 8 und 9 sind achsparallel nebeneinander mehrere Rollen 11 gelagert, die als Werkstückauflage dienen. Die Rollen 11 sind frei drehbar und tangieren an ihrer Oberseite eine gedachte gemeinsame Ebene. Zwischen Rollen 11a und 11b liegt zwischen den Profilschienen 8 und 9 auf dem Untergestell 7 ein Art plattenförmiger Auflagetisch 12 auf. Der Auflagetisch 12 weist im Ursprungszustand eine ebene glatte Fläche auf, die sich auf der gleichen Höhe befindet, wie die Ebene, die durch die Rollen 11 definiert wird.

Neben der Profilschiene 9 ist ein ortsfester Backen 13 eines Spannstocks 14 befestigt, der eine ebene Anlageflächen trägt. Der Spannstock 14 weist ferner einen beweglichen Backen 15 auf, der über nicht weiter gezeigte Schienen rechtwinklig gegenüber dem feststehenden Backen 13 zustellbar ist. Zwischen den beiden Backen 13 und 15 kann ein in Figur 1 erkennbares Werkstück 16 in Gestalt eines I-Trägers 16 festgespannt werden. Der I-Träger 16 erstreckt sich senkrecht zu der Zeichenebene von Figur 1.

Der Hauptträger 3 setzt sich aus zwei Pfeilern 17 und 18 zusammen, die über ein Querjoch 19 miteinander verbunden sind. Die beiden Pfeiler 17 und 18 stehen beidseits des Maschinengestells 2 und sind gegebenenfalls über eine weitere Quertraverse 20 mit dem Maschinengestell 2 verbunden.

Das Querjoch 19 enthält ein Schwenklager 21, über das der Hauptträger 3 mit dem Zwischenträger 4 verbunden ist. Zu dem Schwenklager 21 gehört eine Lagerwelle 22, die durch eine entsprechende Bohrung in dem Querjoch 19 hindurchführt. Die Welle 22 trägt an ihrem oberen Ende drehfest ein Zahnrad 23, das mit einer Schnecke eines Antriebsmotors 24 kämmt. Die Welle 22 ist durch nicht weiter gezeigte, an sich bekannte Elemente, beispielsweise Rillenkugellage,r axial in dem Querjoch 19 gesichert. An ihrem unteren Ende ist die Welle 22 drehfest mit dem Zwischenträger 4 verbunden.

Die Welle 22 definiert eine vertikale Drehachse 25, die in einer Ebene liegt, in der auch die Werkstückanlagefläche des feststehenden Spannbackens 13 liegt.

Der Zwischenträger 4 ist gabelförmig und setzt sich aus einem Querbalken 26 sowie zwei parallel im Abstand zueinander verlaufenden Schenkel 27 und 28 zusammen.

Der Querbalken 26 verläuft horizontal und somit parallel zu dem Querjoch 19, während die beiden Schenkel 27 und 28 parallel zu der vertikalen Drehachse 25 ausgerichtet sind.

Jeder beiden Schenkel 27 und 28 trägt auf der dem Betrachter zugekehrten Seite jeweils eine Führungsschiene 31, die als Parallelführungsschiene mit komplementären Führungsschlitten an dem Sägerahmen 5 zusammenwirkt. Die komplementären Führungsschlitten sind in Figur 2 in der Draufsicht bei 32 veranschaulicht. Die Schlitten 32 und die Führungsschienen 31 können zusammen als Kugelführungen ausgebildet sein.

Der Sägerahmen 5 ist ein kastenförmiges Gehäuse, in dem zwei gestrichelt angegebene Umlenkrollen 33 achsparallel zueinander gelagert sind. Die Drehachsen liegen horizontal. Um die beiden Umlenkrollen 33 läuft ein Sägeband 34 um. Im unteren Bereich ist der Sägerahmen 5 mit einer Aussparung 35 versehen, in der das Sägeband 34 freigestellt ist. Im Bereich dieser Aussparung 35 sind zwei Sägebandführungen 36 und 37 vorhanden, mit deren Hilfe das Sägeband 34 in eine hochkant stehende Lage gedreht wird, so dass die Zähne des Sägebandes zwischen den beiden Sägebandführungen 36 und 37, wie gezeigt, nach unten ausgerichtet sind, während im übrigen Verlauf das Sägeband 34 flach liegt.

Mit Hilfe eines Antriebsmotors 38, der an der Rückseite des Sägerahmens 5 angeflanscht ist, wird die rechte Umlenkscheibe 33 wahlweise in Umdrehungen versetzt. Ein weiterer nicht gezeigter Antrieb dient dazu den Sägerahmen 5 beim Schnitt in Richtung auf das Werkstück 16 zuzustellen.

Wie die Figuren erkennen lassen, ist der Abstand zwischen den beiden Pfeilern 17 und 18 groß genug, damit der Sägerahmen 5 zusammen mit einem Antriebsmotor 38 ohne weiteres dazwischen Platz findet.

Die Verwendung der gezeigten Metallbandsäge 1 ist wie folgt:

Nach Öffnen des Spannstocks 14 wird über die Auflagerollen 11 ein Werkstück 16 zugeführt, das durch Schließen des Spannstocks 14 zwischen den beiden Spannbacken 13 und 15 festgeklemmt wird. Die Spannbacken 13 und 15 sind so positioniert bzw. verstellbar, dass in jeder beliebigen Gehrungseinstellung das Sägeband 34 nicht mit den Spannbacken 13 und 15 kollidieren kann.

Nachdem das Werkstück 16 festgeklemmt ist, wird durch Ingangsetzen des Antriebsmotors 24 der gewünschte Gehrungswinkel eingestellt. Hierzu wird die Welle 22 um die Vertikalachse 25 gedreht. Dabei wird der Zwischenträger 4 zusammen mit den Sägerahmen 5 entsprechend mit verschwenkt. Die Schwenkbewegung wird stillgesetzt, sobald der gewünschte Winkel zwischen dem Sägeband 34 und der Längsachse des Werkstückes 16 erreicht ist.

Aufgrund der speziellen Art der getrieblichen Verbindung zwischen der Welle 22 und dem Antriebsmotor 24 wird nach dem Stillsetzen des Antriebsmotors 24 jegliche Drehbewegung der Welle 22 blockiert, d.h. die einmal gewählte Gehrungseinstellung bleibt erhalten.

Nach Einstellen des Gehrungswinkels wird mit Hilfe eines nicht weiter gezeigten Antriebsmotors der Sägerahmen 5 längs der beiden Schenkel 27 und 28, die als Parallelführung wirken, vertikal nach unten geführt. Dabei taucht das zwischen den beiden Sägebandführungen 36 und 37 hochkant gestellte Sägeband 34 in das Werkstück 16 ein und schneidet es durch. Die Zustellbewegung wird beendet, nachdem das Werkstück 16 vollständig durchtrennt ist. Hierbei wird das Sägeband 34 auch ein Stück weit den Auflagetisch 12 mit einschneiden.

Nach dem Durchtrennen des Werkstückes 16 wird durch die Antriebseinrichtung der Sägerahmen 5 längs der beiden Schenkel 27 und 28 erneut nach oben gefahren, in die Stellung wie sie Figur 1 zeigt. In dieser Stellung besteht ein freier Durchlass zwischen dem Sägeband 34 und der Oberseite der Werkstückauflageeinrichtung 2.

Anstelle eines ortsfesten Spannstocks 14 kann das Maschinengestell 2 auch mit einem Spannstock versehen werden, wie er in der DE 40 40 470 erläutert ist. Bei dieser Anordnung kann der bewegliche Spannbacken 15 in Richtung parallel zu dem feststehenden Spannbacken 13 horizontal hin und her bewegt werden, um eine sicher Klemmung des Werkstücks 16 bei jeder Gehrungseinstellung zu erreichen.

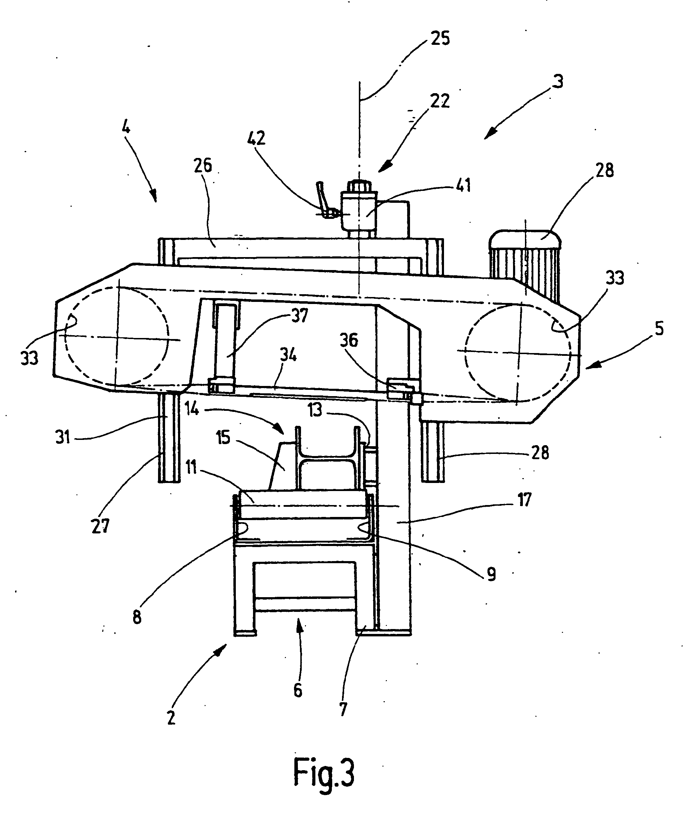

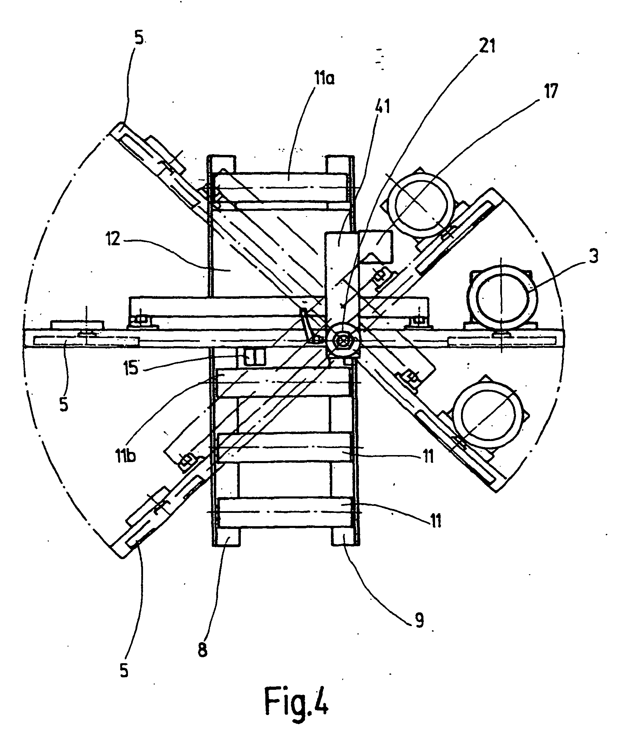

Die Figuren 3 und 4 zeigen ein anderes Ausführungsbeispiel der neuen Metallbandsäge 1. Der wesentliche Unterschied betrifft die Ausgestaltung des Hauptträgers 3.

Während bei dem Ausführungsbeispiel nach den Figuren 1 und 2 ein portalförmige Hauptträger 3 Verwendung findet, hat der Hauptträger 3 bei dem Ausführungsbeispiel nach den Figuren 3 und 4 eine etwa galgenförmige Gestalt. Er besteht aus einem einzigen Pfeiler 17 und einem Kragbalken 41, der ausgehend von dem Pfeiler 17 ein Stück weit in Richtung parallel zu der Längserstreckung des Maschinengestells 2 auskragt. An seinem freien Ende ist er mit dem bereits beschriebenen Schwenklager 21 versehen, das wiederum die Drehachse 25 definiert, die in der Ebene liegt, die die Spannfläche des feststehenden Backens 34 enthält. Der Pfeiler 17 ist unmittelbar am Maschinegestell 2 befestigt.

Bei der Ausführungsform nach den Figuren 3 und 4 ist für die Gehrungseinstellung keine Antriebseinrichtung vorgesehen. Statt dessen wird der Zwischenträger 4 von Hand verschwenkt. Nach Erreichen der gewünschten Gehrungseinstellung wird die Welle 22 durch einen Klemmhebel 42 festgeklemmt.

Die Verwendung eines oberhalb des Werkstückes befindlichen Schwenklager zur Gehrungseinstellung ist nicht auf parallelgeführte Sägerahmen beschränkt.

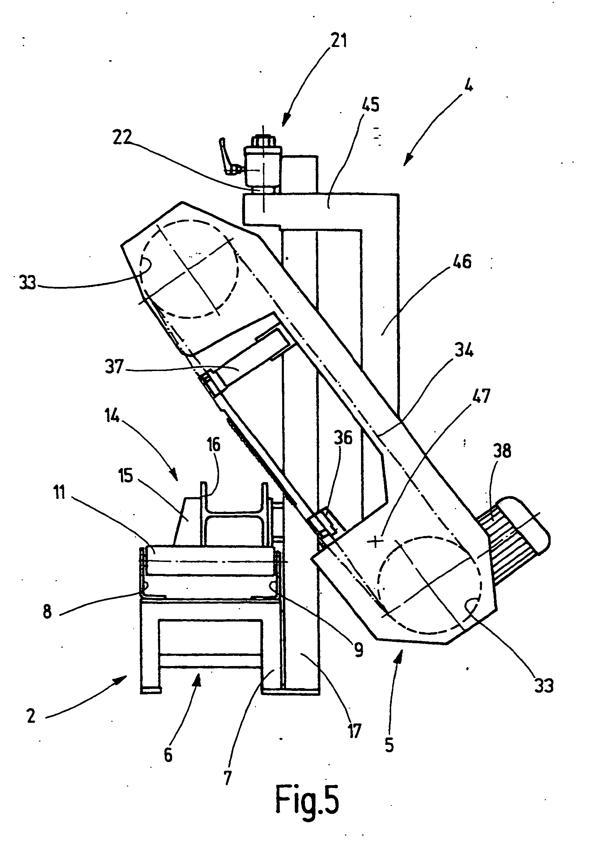

Figur 5 veranschaulicht eine Ausführungsform, bei der der Sägerahmen 5 nach Art eines Klappmessers an dem Zwischenträger 4 befestigt ist. Der Zwischenträger 4 zeigt bei dem Ausführungsbeispiel nach Figur 5 eine L-förmige Gestalt auf, bestehend aus einem Querbalken 45 und einem vertikal nach unten führenden Schenkel 46. An dem unteren freien Ende des Schenkels 46 ist über ein schematisch angedeutetes Schwenklager 47 der Sägerahmen 5 an dem Zwischenträger 4 anscharniert. Die Lage der Schwenkachse 47, die horizontal verläuft, ist so gewählt, dass in der Endlage das Sägeband 34 etwa horizontal verläuft, d.h. denselben Verlauf zeigt, wie das Sägeband 34 bei dem Ausführungsbeispiel nach Figur 1, wenn das Werkstück 16 vollständig durchtrennt ist.

Eine Metallbandsäge weist einen Hauptträger auf, an dem ein Zwischenträger schwenkbar befestigt ist. An dem Zwischenträger sitzt mittels eines Schwenklagers oder einer Parallelführung der Sägerahmen, der auf das Werkstück zustellbar ist. Das Schwenklager, das den Hauptträger und den Zwischenträger miteinander verbindet, befindet sich oberhalb des zu bearbeitenden Werkstücks.

## Patentansprüche

1. Horizontale Metallbandsäge (1) zum Gehrungsschneiden von länglichen Werkstücken,
mit einem Maschinengestell (2), das eine Auflageeinrichtung (11,12) für zu bearbeitende Werkstücke (16) aufweist, wobei die Auflageeinrichtung (11, 12) einer Spansstoode (14) umfasst, der einen Beststehenden und einen zustellbaren Backen (13, 15) aufweist,
mit einem Hauptträger (3), der eine galgenförmige Gestalt aufweist, mit einem seitlichen neben der Auflageeinrichtung (11,12) befindlichen Pfeiler (17) und einem daran befestigten Kragbalken (41),
mit einem Drehlager (21), das an dem Kragbalken (41) oberhalb der Auflageeinrichtung (11,12) angeordnet ist und eine vertikale Drehachse (25) definiert, die durch die Auflageeinrichtung (11,12) führt und die in einer Ebene liegt, in der auch die Werkstückanlagefläche des feststehenden Spannbackens (13) liegt,
mit einem Zwischenträger (4), der über das Drehlager (21) mit dem Hauptträger (3) verbunden ist und mittels des Drehlagers (21) um die vertikale Achse (25) schwenkbar ist,
mit einem Sägerahmen (5), in dem ein Sägeband (34) geführt läuft und der an dem Zwischenträger (4) beweglich derart gelagert ist, dass er in einer zu der Drehachse (25) parallelen Ebene verschiebbar oder schwenkbar ist.

2. Metallbandsäge nach Anspruch 1, **dadurch gekennzeichnet, dass** der Pfeiler (17) in Richtung parallel zu der Längserstreckung des Maschinengestells (2) gegenüber der vertikalen Schwenkachse (25) versetzt ist, derart, dass der Zwischenträger (4) in entgegengesetzte Gehrungsstellungen zu bringen ist.

3. Metallbandsäge nach Anspruch 1, **dadurch gekennzeichnet, dass** der Pfeiler (17) mit dem Maschinengestell (2) verbunden ist.

4. Metallbandsäge nach Anspruch 1, **dadurch gekennzeichnet, dass** der Zwischenträger (4) eine L-förmige Gestalt aufweist, von dem ein Schenkel (45) mit dem Drehlager (21) verbunden ist, und dass der andere Schenkel (46) mit dem Sägerahmen (5) verbunden ist, wobei der Sägerahmen (5) gegenüber diesem Schenkel (46) beweglich ist.

5. Metallbandsäge nach Anspruch 4, **dadurch gekennzeichnet, dass** der Zwischenträger (4) ein horizontales Schwenklager (47) aufweist, das den Sägerahmen (5) mit dem Zwischenträger (4) verbindet, derart, dass der Sägerahmen (4) um eine horizontale Achse schwenkbar ist.

6. Metallbandsäge nach Anspruch 1, **dadurch gekennzeichnet, dass** der Zwischenträger (4) zwei über ein Joch (26) miteinander verbundene vertikale Schenkel (27,28) aufweist, und dass der Sägerahmen (5) an dem Zwischenträger (4) höhenverstellbar parallel geführt ist.

7. Metallbandsäge nach Anspruch 6, **dadurch gekennzeichnet, dass** an jedem der beiden Schenkel (27,28) eine Linearführung (31) vorgesehen ist, über die der Sägerahmen (5) mit dem Zwischenträger (4) verbunden ist, derart, dass der Sägerahmen längs einer linearen Achse auf das Werkstück (16) zu zustellbar ist.

8. Metallbandsäge nach Anspruch 1, **dadurch gekennzeichnet, dass** die Auflageeinrichtung (11,12) einen Auflagetisch umfasst, dessen Tischplatte (12) lösbar mit dem Maschinengestellt (2) verbunden ist.

9. Metallbandsäge nach Anspruch 1, **dadurch gekennzeichnet, dass** die Tischplatte (12) als Verschleißteil ausgeführt ist.

10. Metallbandsäge nach Anspruch 1, **dadurch gekennzeichnet, dass** die Auflageeinrichtung (11,12) Rollen (11) umfasst, deren Außenumfangsfläche eine Ebene berührt, in der eine Tischfläche (12) liegt.

11. Metallbandsäge nach Anspruch 10, **dadurch gekennzeichnet, dass** der feststehende Backen (13) eine Anlagefläche definiert, die eine Anlageebene festlegt, in der die Vertikale Schwenkachse (21) liegt.

12. Metallbandsäge nach Anspruch 1, **dadurch gekennzeichnet, dass** Antriebseinrichtungen (24,38) vorgesehen sind, die dem Schwenklager zugeordnet ist.

13. Metallbandsäge nach Anspruch 1, **dadurch gekennzeichnet, dass** der Sägerahmen (5) zwei achsparallel zueinander gelagerte Umlenkscheiben (33) aufweist, um die das Sägeband (34) umläuft, und dass das das Sägeband (34) in einem Bereich zwischen den Umlenkrollen (33) gegenüber einer Ebene, die zu den Achsen der Umlenkscheiben (33) parallel ist, gedreht verläuft.

## Claims

1. Horizontal metal-cutting band saw (1) for mitring elongated workpieces,
with a machine frame (2), which has a supporting device (11, 12) for workpieces (16) to be machined, wherein the supporting device (11, 12) comprises a vice (14), which has a fixed and an adjustable jaw (13, 15),
with a main beam (3), which has a gallows-like structure with a lateral pillar (17) located next to the supporting device (11, 12) and a cantilever beam (41) fastened thereto,
with a pivot bearing (21), which is arranged on the cantilever beam (41) above the supporting device (11, 12) and defines a vertical rotational axis (25), which runs through the supporting device (11, 12) and lies in a plane, in which the workpiece contact face of the fixed clamping jaw (13) also lies,
with an intermediate member (4), which is connected to the main beam (3) by means of the pivot bearing (21) and can be pivoted around the vertical axis (25) by means of the pivot bearing (21),
with a saw frame (5), in which a band saw blade (34) runs in a guided manner and which is movably disposed on the intermediate member (4) such that it is displaceable or can be pivoted in a plane parallel to the rotational axis (25).

2. Metal-cutting band saw according to Claim 1, **characterised in that** the pillar (17) is offset relative to the vertical pivot axis (25) in parallel direction to the longitudinal extent of the machine frame (2) in such a way that the intermediate member (4) can be brought into opposed mitring positions.

3. Metal-cutting band saw according to Claim 1, **characterised in that** the pillar (17) is connected to the machine frame (2).

4. Metal-cutting band saw according to Claim 1, **characterised in that** the intermediate member (4) has an L-shaped structure, of which one leg (45) is connected to the pivot bearing (21), and that the other leg (46) is connected to the saw frame (5), wherein the saw frame (5) is movable relative to this leg (46).

5. Metal-cutting band saw according to Claim 4, **characterised in that** the intermediate member (4) has a horizontal swivel bearing (47), which connects the saw frame (5) to the intermediate member (4) in such a way that the saw frame (4) can be swivelled around a horizontal axis.

6. Metal-cutting band saw according to Claim 1, **characterised in that** the intermediate member (4) has two vertical legs (27, 28) connected to one another by means of a crossbeam (26), and that the saw frame (5) is height-adjustable and guided parallel on the intermediate member (4).

7. Metal-cutting band saw according to Claim 6, **characterised in that** a linear guide (31) is provided on each of the two legs (27, 28), the saw frame (5) being connected to the intermediate member (4) by means of said linear guide in such a way that the saw frame can be moved towards the workpiece (16) along a linear axis.

8. Metal-cutting band saw according to Claim 1, **characterised in that** the supporting device (11, 12) comprises a supporting table, the bench surface (12) of which is detachably connected to the machine frame (2).

9. Metal-cutting band saw according to Claim 1, **characterised in that** the bench surface (12) is configured as a wearing part.

10. Metal-cutting band saw according to Claim 1, **characterised in that** the supporting device (11, 12) comprises rolls (11), the outer peripheral face of which touches a plane, in which a bench surface (12) lies.

11. Metal-cutting band saw according to Claim 10, **characterised in that** the fixed jaw (13) defines an abutment surface, which defines an abutment plane, in which the vertical pivot axis (21) lies.

12. Metal-cutting band saw according to Claim 1, **characterised in that** drive means (24, 38) associated with the swivel bearing are provided.

13. Metal-cutting band saw according to Claim 1, **characterised in that** the saw frame (5) has two return pulleys (33) mounted axis-parallel to one another, around which the band saw blade (34) rotates, and that in a region between the return pulleys (33) the band saw blade (34) runs rotated relative to a plane, which is parallel to the axes of the return pulleys (33).

## Revendications

1. Scie à ruban à métaux (1) horizontale, destinée à effectuer des coupes obliques sur des pièces de forme allongée, comprenant
un bâti de machine (2) qui présente un dispositif d'appui (11, 12) pour des pièces à usiner (16), le dispositif d'appui (11, 12) comportant un bloc de serrage (14) constitué d'un mors fixe et d'un mors mobile (13, 15),
un support principal (3) qui présente la forme d'une potence, avec un montant (17) latéral, situé à côté du dispositif d'appui (11, 12), et une poutre en porte-à-faux (41) fixée à celui-ci,
un palier tournant (21) qui est disposé sur la poutre en porte-à-faux (41), au-dessus du dispositif d'appui (11, 12), et définit un axe de rotation (25) vertical qui passe par le dispositif d'appui (11, 12) et se situe dans un plan dans lequel se situe également la surface d'appui de pièce du mors de serrage fixe (13),
un support intermédiaire (4) qui est relié au support principal (3) via le palier tournant (21) et peut pivoter autour de l'axe (25) vertical au moyen du palier tournant (21),
un châssis de scie (5) dans lequel un ruban de scie (34) circule en étant guidé et qui est monté mobile sur le support intermédiaire (4), de manière à ce qu'il puisse être déplacé ou pivoté dans un plan parallèle à l'axe de rotation (25).

2. Scie à ruban à métaux selon la revendication 1, **caractérisée en ce que** le montant (17) est décalé par rapport à l'axe de pivotement (25) vertical, dans la direction qui est parallèle à la dimension longitudinale du bâti de machine (2), de telle sorte que le support intermédiaire (4) peut être amené dans des positions obliques opposées.

3. Scie à ruban à métaux selon la revendication 1, **caractérisé en ce que** le montant (17) est lié au bâti de machine (2).

4. Scie à ruban à métaux selon la revendication 1, **caractérisée en ce que** le support intermédiaire (4) présente la forme d'un L dont une branche (45) est liée au palier tournant (21) et **en ce que** l'autre branche (46) est liée au châssis de scie (5), ledit châssis de scie (5) étant mobile par rapport à cette branche (46).

5. Scie à ruban à métaux selon la revendication 4, **caractérisée en ce que** le support intermédiaire (4) présente une articulation pivotante (47) horizontale qui relie le châssis de scie (5) au support intermédiaire (4), de telle sorte que le châssis de scie (5) peut pivoter autour d'un axe horizontal.

6. Scie à ruban à métaux selon la revendication 1, **caractérisée en ce que** le support intermédiaire (4) présente deux bras (27, 28) verticaux, reliés entre eux par une traverse (26), et **en ce que** le châssis de scie (5) est guidé parallèlement sur le support intermédiaire (4), avec possibilité de réglage en hauteur.

7. Scie à ruban à métaux selon la revendication 6, **caractérisée en ce qu'**il est prévu, sur chacun des deux bras (27, 28), un guide linéaire (31) qui relie le châssis de scie (5) au support intermédiaire (4), de telle sorte que le châssis de scie peut être approché de la pièce (16) suivant un axe linéaire.

8. Scie à ruban à métaux selon la revendication 1, **caractérisée en ce que** le dispositif d'appui (11, 12) comprend une table d'appui dont le plateau (12) est lié de façon amovible au bâti de machine (2).

9. Scie à ruban à métaux selon la revendication 1, **caractérisée en ce que** le plateau de table (12) est réalisé comme pièce d'usure.

10. Scie à ruban à métaux selon la revendication 1, **caractérisée en ce que** le dispositif d'appui (11, 12) comprend des rouleaux (11) dont la surface périphérique extérieure est contigu à un plan dans lequel se trouve un plateau de table (12).

11. Scie à ruban à métaux selon la revendication 10, **caractérisée en ce que** le mors fixe (13) définit une surface d'appui qui détermine un plan d'appui dans lequel se situe l'axe de pivotement (21) vertical.

12. Scie à ruban à métaux selon la revendication 1, **caractérisée en ce qu'**il est prévu des dispositifs d'entraînement (24, 38) qui sont associés à l'articulation pivotante.

13. Scie à ruban à métaux selon la revendication 1, **caractérisée en ce que** le châssis de scie (5) présente deux poulies de renvoi (33) dont les axes sont montés parallèlement l'un à l'autre et autour desquelles circule le ruban de scie (34), et **en ce que**, dans une zone située entre les poulies de renvoi (33), le ruban de scie (34) est tourné par rapport à un plan qui est parallèle aux axes des poulies (33).
